# EUROPÄISCHE PATENTSCHRIFT

(11) **EP 1 569 830 B1**
(45) Veröffentlichungstag und Bekanntmachung des Hinweises auf die Patenterteilung: **24.03.2010**
(21) Anmeldenummer: 03789205.6
(22) Anmeldetag: 10.12.2003
(51) Int. Cl.: B60S 1/24, B60S 1/04, B60S 1/18

(54) **WISCHERANTRIEB**
WIPER DRIVE UNIT
COMMANDE D'ESSUIE-GLACE

(30) Priorität: 10.12.2002 DE 10257552
(43) Veröffentlichungstag der Anmeldung: 07.09.2005
(73) Patentinhaber: Valeo Wischersysteme GmbH, 74321 Bietigheim-Bissingen (DE)
(72) Erfinder: WALTHER, Bernd, 74321 Bietigheim-Bissingen (DE); KAPITZA, Harald, 71640 Ludwigsburg (DE); TEMPEL, Jürgen, 76530 Baden-Baden (DE); WONDRATSCHEK, Frank, 70376 Stuttgart (DE)
(74) Vertreter: Jahn, Wolf-Diethart
(86) Internationale Anmeldenummer: PCT/EP2003/013998
(87) Internationale Veröffentlichungsnummer: WO 2004/052701

(56) Entgegenhaltungen:
- DE-A- 10 011 842
- DE-A- 10 125 988
- DE-A- 19 744 906

## Beschreibung

Die Erfindung betrifft einen Wischerantrieb mit einem Gehäuse, einem Reversiermotor und einem dem Reversiermotor nachgeschalteten Getriebe, wobei an der Getriebeabtriebswelle ein Schwingenelement zum Antrieb mindestens eines Wischerarms oder eines Wischerarmgestänges vorgesehen ist und wobei der Arbeitsbereich des Schwingenelements in einem durch zwei mechanische Anschläge begrenzten Schwenkbereich liegt.

Reversiermotoren zur Verwendung in Wischerantrieben, insbesondere für Scheibenwischanlagen von Kraftfahrzeugen, zeichnen sich dadurch aus, dass ihre Drehrichtung entsprechend den sich auf einer Windschutzscheibe oder einer Heckscheibe hin- und herbewegenden Wischblättern umkehrbar ist. Dies hat den Vorteil, dass ein Gestänge zum Antrieb von zwei Wischarmen sehr klein bauen kann oder dass jeder Wischarm durch Ankopplung an einen eigenen Antriebsmotor unabhängig betrieben werden kann und somit gegebenenfalls kein Übertragungsgestänge benötigt wird.

Die Umkehrung der Drehrichtung wird durch elektrische Ansteuerung des Reversiermotors erreicht. Der Reversiermotor treibt also das nachgeschaltete Getriebe sowie das an der Getriebeabtriebswelle vorgesehene Schwingenelement, das wiederum zum Antrieb eines Wischerarms oder eines Wischerarmgestänges geeignet ist, an, bis der Wischerarm eine seiner Endlagen auf einer zu reinigenden Scheibe erreicht hat. In der Endlage des Wischerarms wird der Reversiermotor derart angesteuert, dass sich dessen Drehrichtung umkehrt, so dass ein Antrieb des Wischerarms in der entgegengesetzten Richtung erfolgt, bis der Wischerarm die andere Endlage erreicht hat. Der Wischerarm wird also durch entsprechende Steuerung innerhalb seines zwischen den Endlagen des Wischerarms angeordneten Arbeitsbereichs bewegt.

Bei Defekt der Steuerung des Reversiermotors besteht die Gefahr, dass der Wischerarm oder das Wischerarmgestänge über die Grenzen des Arbeitsbereichs hinaus bewegt wird. Somit bewegen sich die mit dem Schwingenelement gekoppelten Wischerarme über ihren Wischbereich hinaus und können Schäden an der Fahrzeugkarosserie oder an Aggregaten im Motorraum verursachen. Darüber hinaus kann auch der Wischerantrieb selbst beschädigt werden.

Um eine solche Beschädigung bei einem Ausfall der Steuerung eines Reversiermotors zu vermeiden, wird gemäß der WO 02/22409 A1 vorgeschlagen, dass ein mit einer Motorkurbel verbundenes Antriebselement mit Anschlägen zusammenwirkt, die ein Überschwingen über die Umkehrpositionen des Scheibenwischers hinaus verhindern. Dies ist eine einfache und effektive Maßnahme, um bei Defekten der Steuerung des Reversiermotors eine Beschädigung am Fahrzeug, an Fahrzeugaggregaten oder am Wischerantrieb zu verhindern.

Nachteilig bei dem genannten Stand der Technik ist jedoch, dass die Prüfung und Montage des Wischerantriebs aufwändig ist und ein zuverlässiger Betrieb nach langer Betriebsdauer nicht gewährleistet ist. Um den Rundlauf der noch nicht an einem Trägerelement montierten Motor-/Getriebeeinheit prüfen zu können, wird auf die Getriebeabtriebswelle ein Schwingenelement aufgesetzt. Nach Abschluss der Rundlaufprüfung wird das Schwingenelement wieder von der Getriebeabtriebswelle abgenommen und die Motor-/Getriebeeinheit an einem Trägerelement montiert, das die weiter oben beschriebenen Anschläge zur Begrenzung des Schwenkbereichs des Wischerantriebs trägt. Abschließend wird das Schwingenelement so auf die Getriebeabtriebswelle aufgesetzt, dass das freie Ende des Schwingenelements zwischen den Anschlägen verschwenkbar ist.

DE-A-10 011 842 offenbart den Oberbegriff des Anspruchs 1.

Hiervon ausgehend ist es Aufgabe der Erfindung, einen gattungsgemäßen Wischerantrieb derart weiterzubilden, dass die Montage vereinfacht wird.

Diese Aufgabe wird bei einem Wischerantrieb der eingangs beschriebenen Art erfindungsgemäß dadurch gelöst, dass der als Rohrelement ausgebildete Trägerrahmen zwischen dem Gehäuse und einem Rohrhalteabschnitt des Zusatzelements gesichert ist.

Dadurch, dass mindestens ein Anschlag lösbar und/oder bewegbar ausgebildet ist, kann das Schwingenelement bei der Montage des Wischerantriebs an einem normalerweise karosseriefesten Trägerrahmen aus einer ersten Montagestellung in den Schwenkbereich bewegt werden. Die erste Montagestellung liegt außerhalb des Schwenkbereichs. Der Schwenkbereich ist durch zwei mechanische Anschläge begrenzt, von denen jedoch mindestens ein Anschlag lösbar und/oder bewegbar ausgebildet ist.

Im Normalbetrieb des Wischerantriebs bewegt sich das Schwingenelement nur in einem Arbeitsbereich, der innerhalb des durch die zwei mechanischen Anschläge begrenzten Schwenkbereichs liegt. Dies hat den Vorteil, dass sich im Normalbetrieb das Schwingenelement und die Anschläge nicht berühren, wodurch die Bauteile mechanisch beansprucht werden und eine unerwünschte Geräuschentwicklung stattfindet. Das Schwingenelement schlägt erst dann gegen die mechanischen Anschläge, wenn die Steuerung des Reversiermotors einen Defekt aufweist, so dass dann die Bewegung des Schwingenelements auf den zwischen den mechanischen Anschlägen begrenzten Schwenkbereich begrenzt wird.

Nach der Erfindung ist mindestens ein Anschlag auf mindestens einem Zusatzelement unlösbar angeordnet, wobei das Zusatzelement lösbar an einem Bauteil des Wischerantriebs, insbesondere am Gehäuse, befestigbar ist. Bei dieser Ausführungsform ist also nicht der Anschlag unmittelbar vom Wischerantrieb lösbar und/oder zu diesem relativ bewegbar, sondern der Anschlag ist auf einem Zusatzelement vorgesehen, das seinerseits lösbar an einem Bauteil des Wischerantriebs und an dem Gehäuse befestigt ist. Dies hat einerseits den Vorteil, dass die Handhabung der Anschläge bei ihrer Montage erleichtert wird, und andererseits den Vorteil, dass durch das Zusatzelement weitere Funktionen verwirklicht werden können.

Es können beide Anschläge auf einem Zusatzelement vorgesehen sein oder jeweils ein Anschlag auf zwei Zusatzelementen. Bei Verwendung eines Zusatzelements wird die Anzahl der Bauteile minimiert, bei Verwendung von zwei kleineren Zusatzelementen kann Material und Gewicht eingespart werden.

Wie bereits erwähnt, können mit einem Zusatzelement weitere Funktionen verwirklicht werden. Nach der Erfindung ist mindestens ein Zusatzelement zur Ausübung einer Haltefunktion für eine Verbindung zwischen dem Gehäuse und einem Trägerrahmen geeignet. Das Zusatzelement dient also nicht nur als Träger für einen oder zwei Anschläge, sondern auch als Befestigungselement, um eine Verbindung zwischen dem Gehäuse des Wischerantriebs und einem Trägerrahmen sicherzustellen. Durch Integration der Anschlag- und der Haltefunktion in einem Bauteil kann die Anzahl der Bauteile des Wischerantriebs verringert werden und die Montage des Wischerantriebs erheblich erleichtert werden. Hierdurch ist eine besonders kostengünstige Fertigung möglich.

In Ausgestaltung der Erfindung ist das Zusatzelement in verschiedenen Lagen und/oder in verschiedenen Positionen lösbar am Gehäuse befestigbar. Dies hat den Vorteil, dass das Zusatzelement oder die Zusatzelemente in verschiedenen Einbausituationen verwendet werden können, die beispielsweise auftreten, wenn ein Reversiermotor in verschiedenen Fahrzeugen verschiedene Relativlagen zu den zu reinigenden Scheiben einnimmt. Somit kann der Schwenkbereich durch die in verschiedenen Lagen und/oder an verschiedenen Positionen lösbar am Gehäuse befestigbaren Zusatzelemente variabel eingestellt werden. Dabei kann das gleiche Zusatzelement in verschiedenen Wischerantrieben verwendbar sein, wodurch verschiedene Wischerantriebe mit gleichen Bauteilen darstellbar sind.

Das Zusatzelement ist an mindestens einem, vorzugsweise an mehreren Befestigungspunkten am Gehäuse, befestigbar. Bei Verwendung eines Befestigungspunkts ist das Zusatzelement besonders einfach und schnell montierbar. Um jedoch Kräfte beziehungsweise Momente, die bei Einwirken des Schwingenelements auf einen Anschlag auftreten können, besonders gut ableiten zu können, ist es vorteilhaft, mindestens zwei Befestigungspunkte für das Zusatzelement vorzusehen. Somit ist das Zusatzelement derart am Gehäuse des Wischerantriebs gesichert, dass ein Verschieben des Anschlags bei Aufprall des Schwingenelements ausgeschlossen ist, so dass die Anschläge den Schwenkbereich des Schwingenelements zuverlässig begrenzen können.

Das Zusatzelement ist vorzugsweise als Blechformteil ausgebildet. Somit können auch Zusatzelemente, die gleichzeitig mehrere Funktionen verwirklichen und deswegen eine komplexe Geometrie aufweisen können, sehr kostengünstig hergestellt werden.

Es kann vorteilhaft sein, dass das Zusatzelement unlösbar mit dem Trägerrahmen verbunden ist. Durch diese Maßnahme kann bei der Montage des Wischerantriebs ein Handhabungsschritt eingespart werden, weil das Zusatzelement und der Trägerrahmen bereits ein definierte Relativlage zueinander aufweisen. Die unlösbare Verbindung kann beispielsweise durch Schweißen, Löten, Kleben oder Nieten erzeugt sein.

Nach einem zweiten Beispiel, das nicht von den Ansprüchen abgedeckt wird, ist mindestens ein Anschlag als separates Bauteil vorgesehen, das an einem Bauteil des Wischerantriebs, insbesondere am Gehäuse, befestigbar ist. Hierdurch kann der mindestens eine Anschlag besonders einfach und stabil ausgeführt sein. Vorhandene Wischerantriebe können besonders einfach mit der erfindungsgemäßen Begrenzung des Schwenkbereichs ausgestattet beziehungsweise nachgerüstet werden. Wenn zwei Anschlage als separate Bauteile vorgesehen sind, kann der Reversiermotor auch für den Betrieb im Umlaufbetrieb eingesetzt werden. Auf diese Weise kann auf die Bereitstellung von zwei verschiedenen Motoren für Wischerantriebe im Reversier- beziehungsweise im Umlaufbetrieb verzichtet werden.

Zum Beispiel ist der mindestens eine Anschlag als Stift vorgesehen. Ein solcher Stift weist beispielsweise eine im Wesentlichen zylindrische Gestalt auf und ist beispielsweise mit einer Presspassung in das Gehäuse des Wischerantriebs einsetzbar. Der Stift kann auch vor der Montage des Wischerantriebs an einem Trägerrahmen bereits im Gehäuse angeordnet sein und relativ zum Gehäuse verschiebbar sein. Der Stift erstreckt sich dabei im Wesentlichen senkrecht zu der Ebene, in der sich das Schwingenelement bewegt. Somit kann mit einfachen Mitteln ein Anschlag zur Begrenzung des Schwenkbereichs des Schwingenelements gebildet werden.

Nach einem dritten Beispiel, das nicht von den Ansprüchen abgedeckt wird, wirken die Anschläge mit einem bewegbar und/oder lösbar an oder in dem Schwingenelement vorgesehenen Anschlagelement zusammen. Dies hat den wesentlichen Vorteil, dass die Anschläge bereits im Gehäuse des Wischerantriebs integriert sein können und dass das Schwingenelement problemlos in seinen Schwenkbereich gebracht werden kann. Befindet sich das Schwingenelement in dem Schwenkbereich, kann das Anschlagelement vorzugsweise im Wesentlichen senkrecht zur Ebene, in der sich das Schwingenelement bewegt, versetzt werden, so dass das Anschlagelement nunmehr mit den Anschlägen zusammenwirken kann und eine Sicherung gegen eine Bewegung des Schwingenelements aus seinem Schwenkbereich heraus geschaffen ist.

Das Anschlagelement kann beispielsweise als Stift ausgeführt sein, der verschiebbar in dem Schwingenelement gelagert ist und aus einer Lage, in der er mit den Anschlägen am Wischerantrieb nicht zusammenwirkt, in eine Lage verschoben werden, in der eine Bewegung des Schwingenelements über die Anschläge hinaus nicht möglich ist.

Vorteilhafterweise sind die Anschläge mit einem Bauteil des Wischerantriebs, insbesondere mit dem Gehäuse, einstückig ausgebildet. Beispielsweise sind die Anschläge Teil eines Gussgehäuses, so dass auf die zusätzliche Montage von Anschlägen am Gehäuse verzichtet werden kann. Hierdurch kann ein Montageschritt eingespart werden.

Der Trägerrahmen ist, an dem der Wischerantrieb montierbar ist, als Rohrelement ausgebildet. Dies hat den Vorteil, dass die Lage des Wischerantriebs in mehreren Freiheitsgraden einstellbar ist. So kann der Wischerantrieb entlang der Länge des Rohrelements verschoben werden sowie um dieses herumgedreht werden, so dass eine optimale Einstellung des Wischerantriebs zum Trägerrahmen beziehungsweise zu einer Scheibe eines Fahrzeugs möglich ist.

Vorteilhafterweise ist das Schwingenelement unlösbar mit der Getriebeabtriebswelle verbunden. Hierdurch wird vermieden, dass sich während des Betriebs des Wischerantriebs ein Spiel zwischen dem Schwingenelement und der Getriebeabtriebswelle ausbildet, durch das die Bewegung des angetriebenen Wischerarms oder Wischerarmgestänges ebenfalls mit Spiel behaftet ist. Eine unlösbare Verbindung kann beispielsweise durch Schweißen, Aufpressen oder Verstemmen gebildet sein.

Die Offenlegung betrifft außerdem ein Verfahren, das nicht von den Ansprüchen abgedeckt wird, zur Montage eines insbesondere erfindungsgemäßen Wischerantriebs an einem Trägerrahmen, wobei der Wischerantrieb ein Gehäuse, einen Reversiermotor und ein dem Reversiermotor nachgeschaltetes Getriebe aufweist, wobei an der Getriebeabtriebswelle ein Schwingenelement zum Antrieb mindestens eines Wischerarms oder eines Wischerarmgestänges vorgesehen ist, und wobei der Arbeitsbereich des Schwingenelements in einem durch zwei mechanische Anschläge begrenzten Schwenkbereich liegt, wobei folgende Montageschritte durchgeführt werden:
a) gegenseitiges Ausrichten und Positionieren von Gehäuse und Trägerrahmen, wobei das Schwingenelement eine Lage außerhalb seines Schwenkbereichs einnimmt;
b) Montage eines ersten Anschlags an einem Bauteil des Wischerantriebs, insbesondere an dem Gehäuse;
c) Befestigen des Gehäuses an dem Trägerrahmen;
d) Verschwenken des Schwingenelements in den Schwenkbereich; und
e) Montage eines zweiten Anschlags an einem Bauteil des Wischerantriebs, insbesondere an dem Gehäuse.

Die genannten Schritte können auch in anderer Reihenfolge, insbesondere in der Reihenfolge a), d), b), e) und c) oder a), c), d), b) und e) durchgeführt werden. Anstelle der Schritte b) und e) der letztgenannten Reihenfolge der Montageschritte kann auch ein bewegbar und/oder lösbar an oder in dem Schwingenelement vorgesehenes Anschlagelement verschoben werden.

Die einzelnen Montageverfahren sowie vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

In der Zeichnung zeigen:
- Figuren 1 a - e:: einen Wischerantrieb mit einem Zusatzelement;
- Figuren 2 a - c:: einen Wischerantrieb mit zwei Zusatzelementen;
- Figuren 3 a - c:: einen Wischerantrieb mit einem Zusatzelement gemäß einem zweiten Beispiel das nicht von den Ansprüchen abgedeckt wird
- Figuren 4 a - c:: eine Abwandlung der Ausführungsform gemäß Figuren 3 a - c;
- Figuren 5 a - d:: einen Wischerantrieb mit einem separat vorgesehenen Anschlag;
- Figuren 6 a - c:: einen Wischerantrieb mit zwei separat vorgesehenen Anschlägen; und
- Figuren 7 a - d:: einen Wischerantrieb mit einem verschiebbar in einem Schwingenelement gelagerten Anschlagelement.

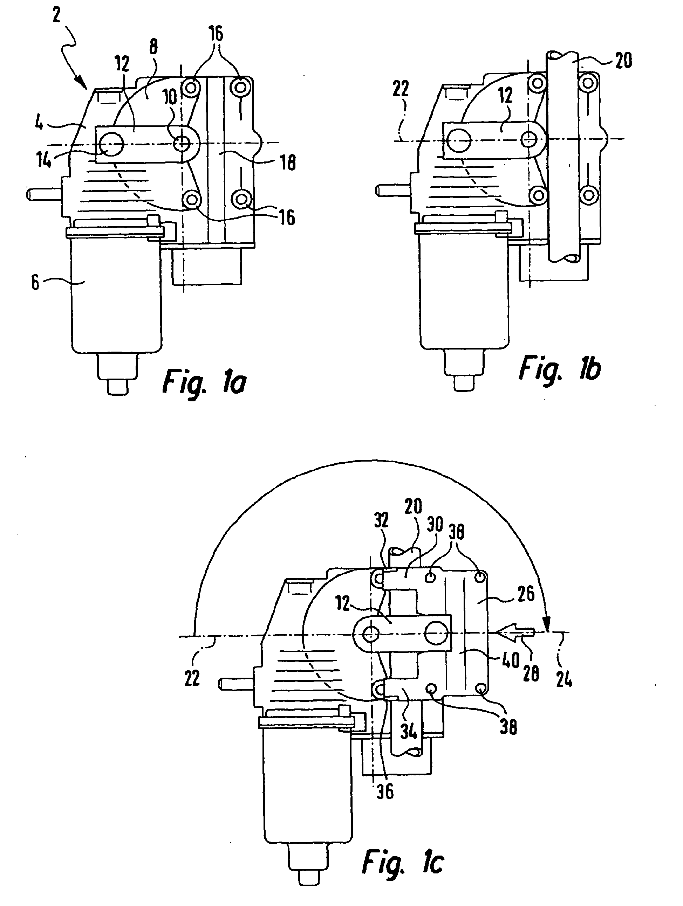

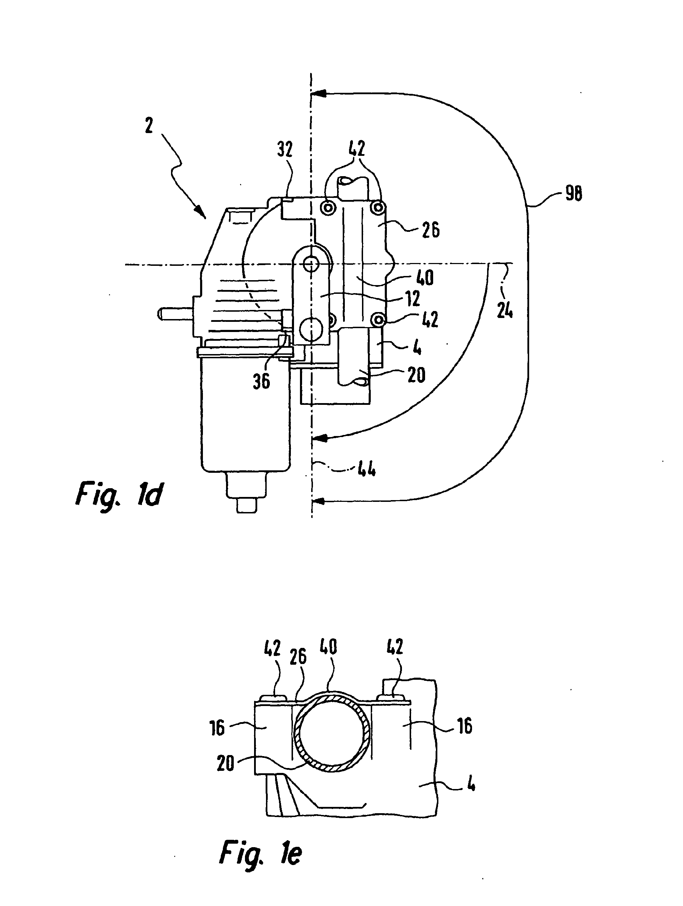

In Figur 1 ist ein Wischerantrieb insgesamt mit dem Bezugszeichen 2 bezeichnet. Der Wischerantrieb weist ein Gehäuse 4 für einen Reversiermotor 6 und einem diesem nachgeschalteten Getriebe 8 auf. Das Getriebe 8 ist mit einer Getriebeabtriebswelle 10 versehen, die aus dem Gehäuse 4 hervorsteht und an deren Ende ein Schwingenelement 12 aufgesetzt ist, das unlösbar mit der Getriebeabtriebswelle 10 verbunden ist. Die unlösbare Verbindung ist als Pressverbindung ausgestaltet.

An dem der Getriebeabtriebswelle 10 abgewandten Ende des Schwingenelements 12 ist ein Gelenkbolzen 14 vorgesehen, der fest mit dem Schwingenelement 12 verbunden ist und zum Antrieb eines Wischerarms oder eines Wischerarmgestänges dient.

Das Gehäuse 4 weist ferner insgesamt vier Gewindesockel 16 auf, die jeweils paarweise benachbart zu einem länglichen Rohraufnahmebereich 18 angeordnet sind. Der Rohraufnahmebereich 18 dient zur Aufnahme eines als Rohrelement ausgebildeten Trägerrahmens (siehe Figur 1b).

Der Wischerantrieb 2 ist in der Figur 1a in seinem Zustand zu Beginn der Montage dargestellt. In Figur 1b ist zusätzlich das Rohrelement 20 dargestellt, das in dem durch die Gewindesockel 16 begrenzten Rohraufnahmebereich 18 eingelegt ist. Das Schwingenelement 12 ist in der Figur 1b in einer ersten Schwingenposition 22 dargestellt.

Mit Bezug auf Figur 1c befindet sich das Schwingenelement 12 in einer gegenüber der ersten Schwingenposition 22 um 180° in die Schwingenposition 24 verschwenkten Position. Zwischen dem ebenfalls in Figur 1c dargestellten Rohrelement 20 und dem in der Schwingenposition 24 befindlichen Schwingenelement 12 ist ein Zusatzelement 26 gemäß der Einschubrichtung 28 teilweise in den zwischen dem Rohrelement 20 und dem Schwingenelement 12 gebildeten Zwischenraum eingeschoben. Das Zusatzelement 26 ist als Blechformteil ausgebildet und weist einen ersten Anschlaghalteabschnitt 30 für einen ersten Anschlag 32 auf, der sich senkrecht zur Zeichenebene erstreckt. Das Zusatzelement 26 weist ferner einen zweiten Anschlaghalteabschnitt 34 für einen zweiten Anschlag 36 auf, der sich ebenfalls senkrecht zur Zeichenebene erstreckt. Das Zusatzelement 26 ist ferner mit insgesamt vier Durchgangslöchern 38 versehen, deren Anordnung der Anordnung der in Figur 1a dargestellten Gewindesockel 16 entspricht. Die Durchgangslöcher 38 begrenzen jeweils paarweise einen sich parallel zum Rohrelement 20 erstreckenden Rohrhalteabschnitt 40.

In Figur 1d ist das Zusatzelement 26 in der Lage dargestellt, die es nach Fertigstellung der Montage des Wischerantriebs 2 einnimmt. Das Zusatzelement 26 ist mit Schrauben 42, die die in Figur 1c dargestellten Durchgangslöcher 38 durchgreifen, in den in Figur 1a dargestellten Gewindesockeln 16 befestigt. Somit ist das Rohrelement 20 zwischen dem Gehäuse 4 und dem Rohrhalteabschnitt 40 des Zusatzelements 26 gesichert.

Das Schwingenelement 12 ist gemäß Figur 1d gegenüber der in Figur 1c dargestellten Lage 24 um weitere 90° in eine dritte Schwingenposition 44 verschwenkt. In der in Figur 1d dargestellten Position liegt das Schwingenelement 12 an dem zweiten Anschlag 36 an. Der Anschlag 36 und der Anschlag 32 begrenzen einen Schwenkbereich 98, innerhalb dessen das Schwingenelement 12 bewegbar ist. Der Arbeitsbereich des Schwingenelements 12 liegt innerhalb des Schwenkbereichs 98.

In Figur 1e ist die Sicherung des Rohrelements 20 am Wischerantrieb 2 im Detail dargestellt. Das Rohrelement 20 ist in einem Raum aufgenommen, der nach unten hin durch das Gehäuse 4 und seitlich durch die Gewindesockel 16 begrenzt ist. Das Rohrelement 20 ist nach oben hin durch das Zusatzelement 26, das mit seinem Rohrhalteabschnitt 40 an dem Rohrelement 20 anliegt, mit Hilfe von Schrauben 42 gesichert.

Die Montage des in den Figuren 1 a - 1e dargestellten Wischerantriebs 2 umfasst insgesamt fünf Montageschritte. Zunächst wird das Rohrelement 20 in den Rohraufnahmebereich 18 des Gehäuses 4 eingelegt (vergleiche Figuren 1a und 1b). Im zweiten Schritt wird das Schwingenelement 12 aus seiner ersten Position 22 in seine zweite Position 24 verschwenkt (Figur 1c) und in einem dritten Schritt das Zusatzelement 26 gemäß Einschubrichtung 28 in den Zwischenraum zwischen dem Rohrelement 20 und dem Schwingenelement 12 geschoben (Figur 1c). In einem vierten Montageschritt wird das Zusatzelement 26 an dem Gehäuse 4 gesichert, wobei das Rohrelement 20 festgeklemmt wird (vergleiche Figuren 1d und 1e). In einem abschließenden Montageschritt wird das Schwingenelement 12 aus der in Figur 1c dargestellten Position 24 in die in der in Figur 1d dargestellten Position 44 verschwenkt.

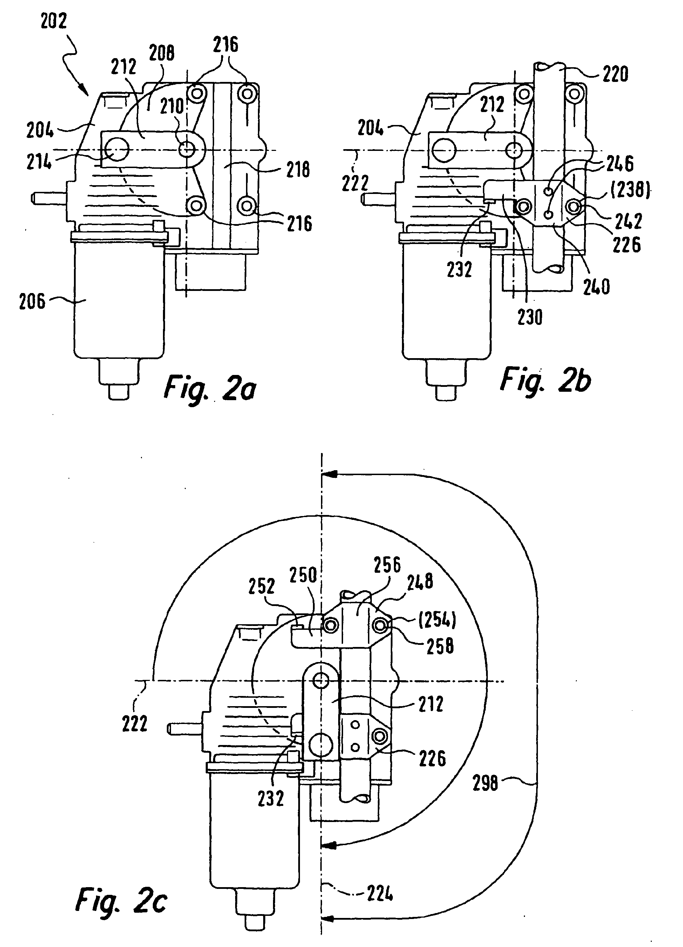

Die im Folgenden beschriebenen Ausführungsformen basieren im Prinzip auf dem in Figur 1a dargestellten ursprünglichen Montagezustand des Wischerantriebs 2. Die Bezugszeichen gemäß Figur 1a sind für die in den Figuren 2 bis 7 dargestellten Ausführungsformen beibehalten worden, wobei die Bezugszeichen mit Bezug auf die jeweilige Ausführungsform in 100er-Schritten erweitert wurden. Somit trägt der in Figur 2a dargestellte Wischerantrieb das Bezugszeichen 202. Sämtliche mit Bezug auf Figur 2a dargestellten Bauteile 204 bis 218 entsprechen den in Figur 1a dargestellten Bauteilen 4 bis 18. So ist gemäß Figur 2a ein Rohraufnahmebereich 218 vorgesehen, der jeweils paarweise von Gewindesockeln 216 begrenzt ist. Gemäß Figur 2b ist in dem Rohraufnahmebereich ein Rohrelement 220 eingesetzt, das fest mit einem Zusatzelement 226 verbunden ist. Das Zusatzelement 226 weist einen Anschlaghalteabschnitt 230 auf, an dessen Ende ein erster Anschlag 232 vorgesehen ist, der sich senkrecht zur Zeichenebene erstreckt. Das Zusatzelement 226 weist zwei Durchgangslöcher 238 auf, die auf beiden Seiten eines Rohrhalteabschnitts 240 vorgesehen sind und von Schrauben 242 durchgriffen sind, die in den in Figur 2a dargestellten Gewindesockeln 216 befestigt sind. Das Zusatzelement 226 ist durch eine Schweißverbindung 246 in Form von zwei Schweißpunkten mit dem Rohrelement 220 verbunden.

Mit Bezug auf Figur 2c ist das Schwingenelement 212 gegenüber der in Figur 2b dargestellten Schwingenposition 222 um 270° im Uhrzeigersinn in eine zweite Schwingenposition 224 verschwenkt. In dieser Position liegt das Schwingenelement 212 am Anschlag 232 des Zusatzelements 226 an.

Es ist ferner ein zweites Zusatzelement 248 vorgesehen, das einen Anschlaghalteabschnitt 250 aufweist, auf dem ein zweiter Anschlag 252 angeordnet ist. Der zweite Anschlag 252 erstreckt sich ebenfalls senkrecht zur Zeichenebene.

Das zweite Zusatzelement 248 weist zwei Durchgangslöcher 254 auf, die beidseitig eines Rohrhalteabschnitts 256 angeordnet sind und von Schrauben 258 durchgriffen sind, die in den in Figur 2a dargestellten Gewindesockeln 216 befestigt sind. Die Anschläge 232 und 252 begrenzen einen Schwenkbereich 298, der sich im Wesentlichen über 180° erstreckt.

Zur Montage des in den Figuren 2 a - c dargestellten Wischerantriebs 202 sind die folgenden Montageschritte erforderlich. Zunächst wird das Zusatzelement 226 mit Hilfe der Schweißverbindung 246 an dem Rohrelement 220 befestigt. Das Rohrelement 220 und das Zusatzelement 226 werden dann als Baugruppe dem Gehäuse 204 des Wischerantriebs 202 zugeführt, so dass das Rohrelement 220 in den Rohraufnahmebereich 218 aufgenommen ist. Im nächsten Schritt wird das Zusatzelement 226 mit Hilfe der Schrauben 242 am Gehäuse 204 des Wischerantriebs 202 befestigt (vergleiche Figur 2b). Im nächsten Schritt wird das Schwingenelement 212 aus der in Figur 2b dargestellten Position 222 um 270° in die in Figur 2c dargestellte Position 224 verschwenkt, in der das Schwingenelement 212 an dem Anschlag 232 des Zusatzelements 226 zur Anlage kommt. Im nächsten Schritt wird das Zusatzelement 248 mit Hilfe der Schrauben 258 am Gehäuse 204 des Wischerantriebs 202 befestigt.

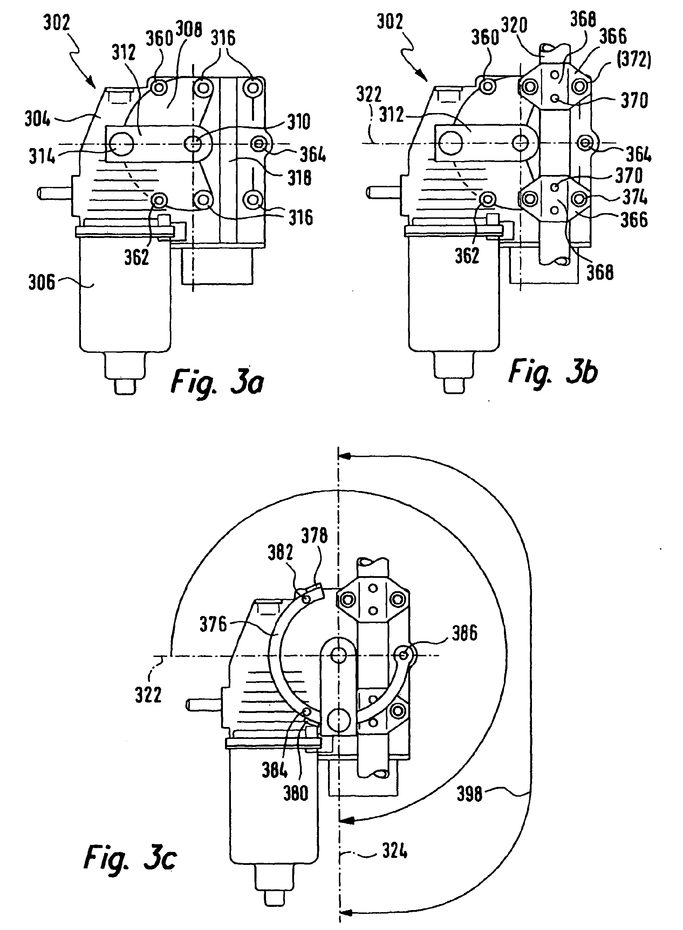

Der in Figur 3a dargestellte Wischerantrieb 302 entspricht im Wesentlichen dem in Figur 1a dargestellten Wischerantrieb 2. Zusätzlich sind auf dem Gehäuse 304 insgesamt drei Befestigungspunkte 360, 362 und 364 vorgesehen. Die Befestigungspunkte 360 bis 364 sind bezogen auf die Getriebeabtriebswelle 310 auf einem Kreisumfang und in einem Abstand von jeweils 120° angeordnet.

Mit Bezug auf Figur 3b ist der Wischerantrieb 302 dargestellt, in dessen Rohraufnahmebereich 318 ein Rohrelement 320 eingelegt ist. An dem Rohrelement 320 sind zwei Halteelemente 366 angeordnet, die jeweils mittig einen Rohrhalteabschnitt 368 aufweisen. Die Halteelemente 366 sind über Punktschweißverbindungen 370 unlösbar mit dem Rohrelement 320 verbunden. Die Halteelemente 366 weisen auf beiden Seiten der Rohrhalteabschnitte 368 Durchgangslöcher 372 auf, die von Schrauben 374 durchgriffen sind, die in den in Figur 3a dargestellten Gewindesockeln 316 befestigt sind.

Gemäß Figur 3c ist das Schwingenelement 312 gegenüber der in Figur 3b dargestellten Position 322 um 270° in die Position 324 verschwenkt dargestellt. Gemäß Figur 3c ist ein Zusatzelement 376 vorgesehen, das im Wesentlichen kreisbogenförmig ausgebildet ist und sich über circa 240° erstreckt. Das Zusatzelement 376 trägt an einem seiner freien Enden einen ersten Anschlag 378 und in einem Winkelabstand von circa 120° zum ersten Anschlag 378 einen zweiten Anschlag 380. Das Zusatzelement 376 ist mit Hilfe von drei Befestigungselementen 382, 384 und 386 an den in Figur 3a dargestellten Befestigungspunkten 360, 362 und 364 gesichert. Die Anschläge 378 und 380 begrenzen einen Schwenkbereich 398, der sich über circa 180° erstreckt.

Zur Montage des in Figuren 3 a - c dargestellten Wischerantriebs 302 sind die folgenden Schritte notwendig: Zunächst werden die Halteelemente 366 über die Schweißverbindung 370 an dem Rohrelement 320 befestigt. Im folgenden Schritt wird die Baugruppe aus Rohrelement 320 und Halteelementen 366 dem Wischerantrieb 302 zugeführt und dort mit Hilfe von Schrauben 374 gesichert. Im nächsten Schritt wird das Schwingenelement 312 aus der ersten Schwingenposition 322 in die zweite Schwingenposition 324 um circa 270° verschwenkt. Im abschließenden Montageschritt wird das Zusatzelement 376 mit Hilfe der Befestigungselemente 382 bis 386 an den Befestigungspunkten 360 bis 364 fixiert.

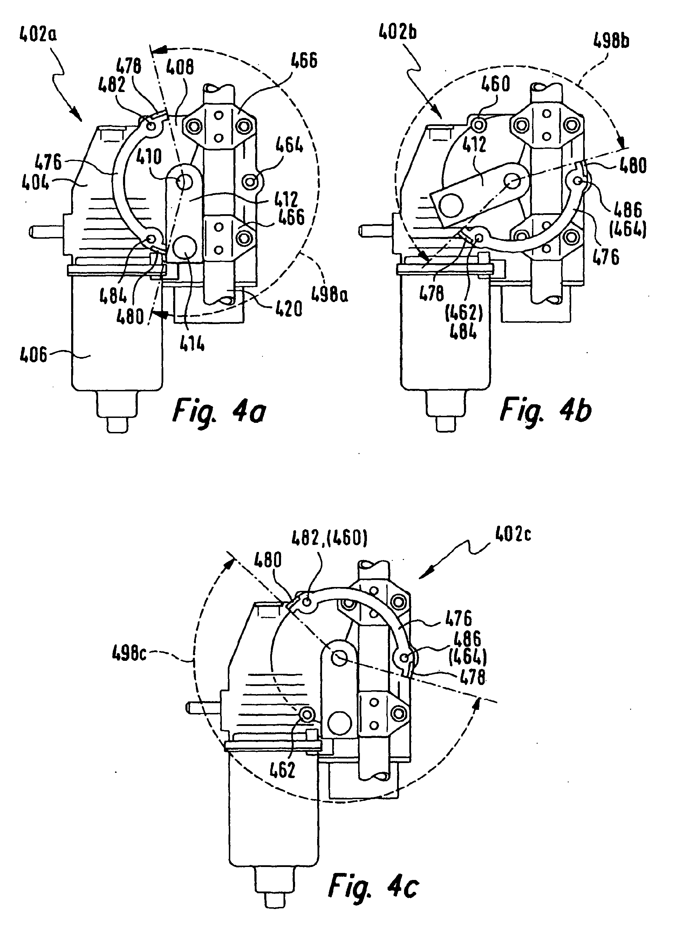

In den Figuren 4 a - c sind drei Abwandlungen gegenüber der in den Figuren 3 a - c dargestellten Ausführungsform dargestellt. Das bei der Variante gemäß Figur 4a verwendete Zusatzelement 476 erstreckt sich nicht wie das gemäß Figur 3c verwendete Zusatzelement 376 über einen Winkel von ca. 240°, sondern lediglich über einen Winkel von circa 120°. Das in Figur 4a dargestellte Zusatzelement 476 weist an seinen Enden jeweils einen Anschlag 478 beziehungsweise 480 auf. Das Zusatzelement 476 ist an dem Gehäuse 404 des Wischerantriebs 402a mit Hilfe von zwei Befestigungselementen 482 und 484 fixiert. Der Befestigungspunkt 464 des Wischerantriebs 402a wird bei der in Figur 4a dargestellten Variante nicht verwendet. Die Anschläge 378 und 480 begrenzen einen Schwenkbereich 498a des Schwingenelements 412, der sich über circa 240° erstreckt.

Bei der in Figur 4b dargestellten Variante wird das gleiche Zusatzelement 476 verwendet wie bei dem Wischerantrieb 402a gemäß Figur 4a. Das gemäß Figur 4b verwendete Zusatzelement 476 ist an den verdeckt dargestellten Befestigungspunkten 462 und 464 mit Hilfe von zwei Befestigungselementen 484 und 486 befestigt. Die endseitig am Zusatzelement 476 ausgebildeten Anschläge 478 und 480 begrenzen einen Schwenkbereich 498b, der sich im Wesentlichen über 240° erstreckt und gegenüber dem in Figur 4a dargestellten Schwenkbereich 498a um circa 120° im Uhrzeigersinn versetzt ist.

Das in Figur 4c dargestellte Zusatzelement 476 ist mit Befestigungselementen 482 und 486 an den Befestigungspunkten 460 und 464 befestigt. Das Zusatzelement 476 begrenzt mit seinen Anschlägen 478 und 480 einen Schwenkbereich 498c, der sich im Wesentlichen über 240° erstreckt und gegenüber dem in Figur 4b dargestellten Schwenkbereich 498b um circa 120° im Uhrzeigersinn versetzt ist.

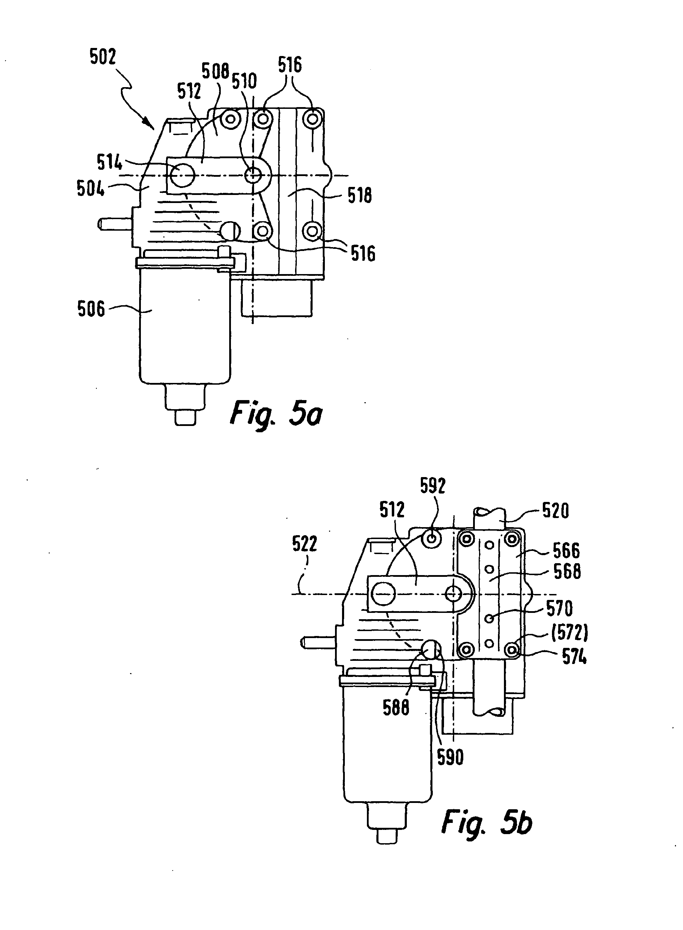

Die in Figur 5a dargestellte Ausführungsform eines Wischerantriebs 502 entspricht dem in Figur 1a dargestellten Wischerantrieb 2. In dem Rohraufnahmebereich 518 des Wischerantriebs 502 ist gemäß Figur 5b ein Rohrelement 520 eingelegt, das mit einem Halteelement 566 versehen ist, das einen mittig angeordneten Rohrhalteabschnitt 568 aufweist, der über Punktschweißverbindungen 570 mit dem Rohrelement 520 verbunden ist. Das Halteelement 566 weist Durchgangslöcher 572 auf, die von Schrauben 574 durchgriffen sind, die in den in Figur 5a dargestellten Gewindesockeln 516 befestigt sind. Das Gehäuse 504 des Wischerantriebs 502 weist einen einstückig mit dem Gehäuse 504 ausgebildeten Anschlag 588 auf, in dem eine Stufe 590 vorgesehen ist, die dem Rohrelement 520 zugewandt ist.

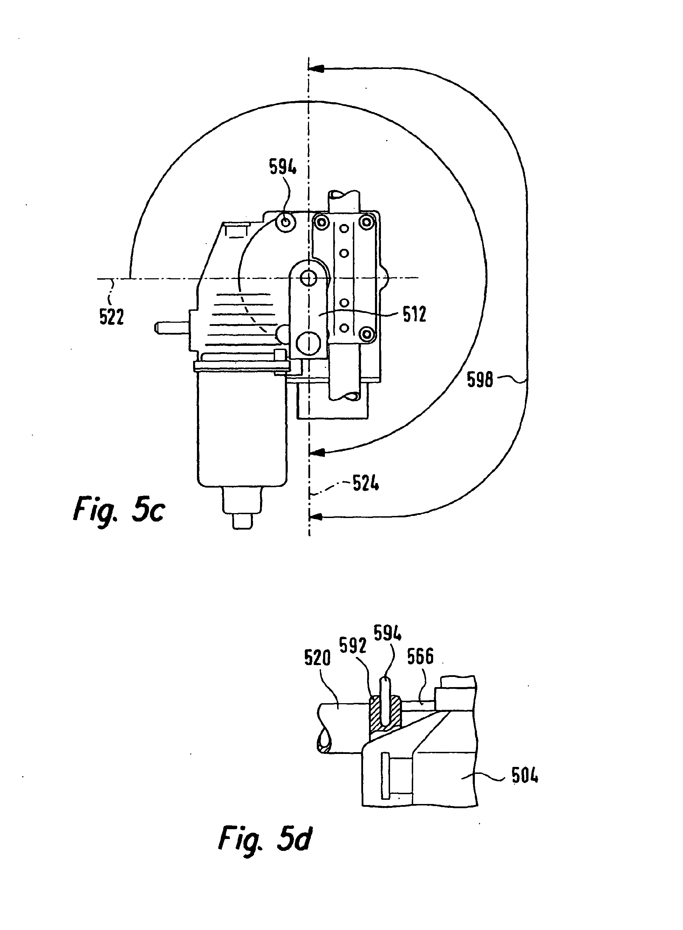

Das Gehäuse 504 weist ferner eine Stiftaufnahme 592 auf. In diese ist gemäß Figuren 5c und 5d ein Stift 594 eingesetzt, der als zweiter Anschlag dient. Der Stift 594 erstreckt sich im Wesentlichen senkrecht zu der Schwenkebene des Schwingenelements 512.

Zur Montage der in Figuren 5 a - d dargestellten Ausführungsform des Wischerantriebs 502 sind die folgenden Schritte notwendig: Zunächst wird das Halteelement 566 über eine Punktschweißverbindung mit dem Rohrelement 520 verbunden. Das Rohrelement 520 wird dann zusammen mit dem Halteelement 566 dem Wischerantrieb 502 zugeführt und das Rohrelement 520 in den Rohraufnahmebereich 518 im Gehäuse 504 des Wischerantriebs 502 eingesetzt. Im nächsten Schritt wird das Halteelement 566 an dem Gehäuse 504 mit Hilfe von Schrauben 574 befestigt. Anschließend wird das Schwingenelement 512 aus einer ersten Schwingenposition 522 um circa 270° in eine zweite Schwingenposition 524 verschwenkt (vergleiche Figuren 5b und 5c). Anschließend wird der Stift 594 in die Stiftaufnahme 592 gesetzt, so dass durch den gestuften Anschlag 588 und den Stift 594 ein Schwenkbereich 598 des Schwingenelements 512 begrenzt ist.

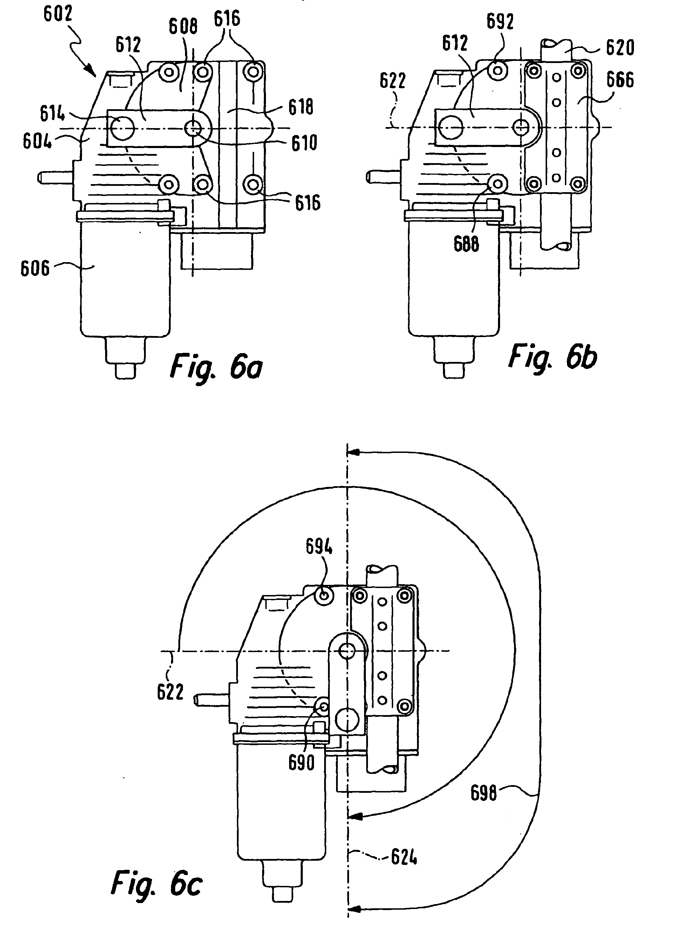

Die in den Figuren 6 a - c dargestellte Ausführungsform eines Wischerantriebs 602 entspricht weitgehend der in Figuren 5 a - d dargestellten Ausführungsform. Anstelle eines einstückig mit dem Gehäuse verbundenen Anschlags sind jedoch insgesamt gemäß Figur 6b zwei Anschlagaufnahmen 688 und 692 vorgesehen, in die gemäß Figur 6c zwei jeweils als Anschlag dienende Stifte 690 und 694 eingesetzt sind. Die Stifte 690 und 694 sind in den jeweiligen Aufnahmen 698 und 692 aufgenommen, wie es bereits mit Bezug auf Figur 5d beschrieben wurde.

Zur Montage der in Figuren 6 a - c dargestellten Ausführungsform des Wischerantriebs 602 sind die folgenden Schritte notwendig: Zunächst wird das Rohrelement 620 über eine Punktschweißverbindung mit dem Halteelement 666 verbunden. Die beiden Bauteile werden dann als Baugruppe dem Wischerantrieb 602 zugeführt und das Rohrelement 620 in den Rohraufnahmebereich 618 eingesetzt. Anschließend wird das Halteelement 666 über Schrauben an dem Gehäuse 604 fixiert. Im nächsten Schritt wird das Schwingenelement 612 aus der in Figur 6b dargestellten Schwingenposition 622 um circa 270° in die in Figur 6c dargestellte Schwingenposition 624 verschwenkt. Abschließend werden die Stifte 690 und 694 in die Aufnahmen 688 und 692 eingesetzt. Durch die Stifte 690 und 694 ist nunmehr ein Schwenkbereich 698 begrenzt, der sich über circa 180° erstreckt.

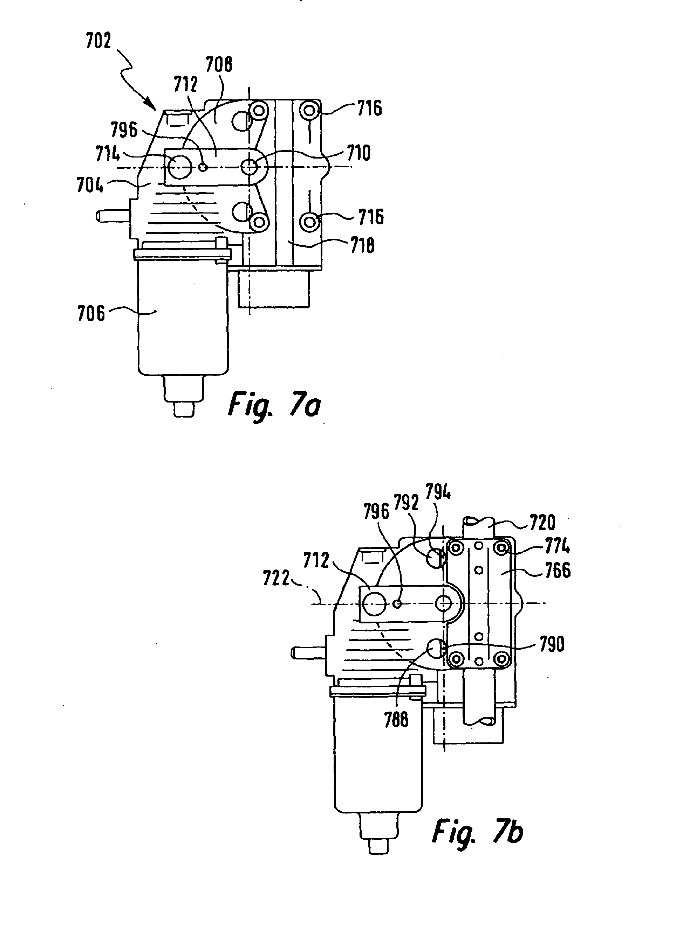

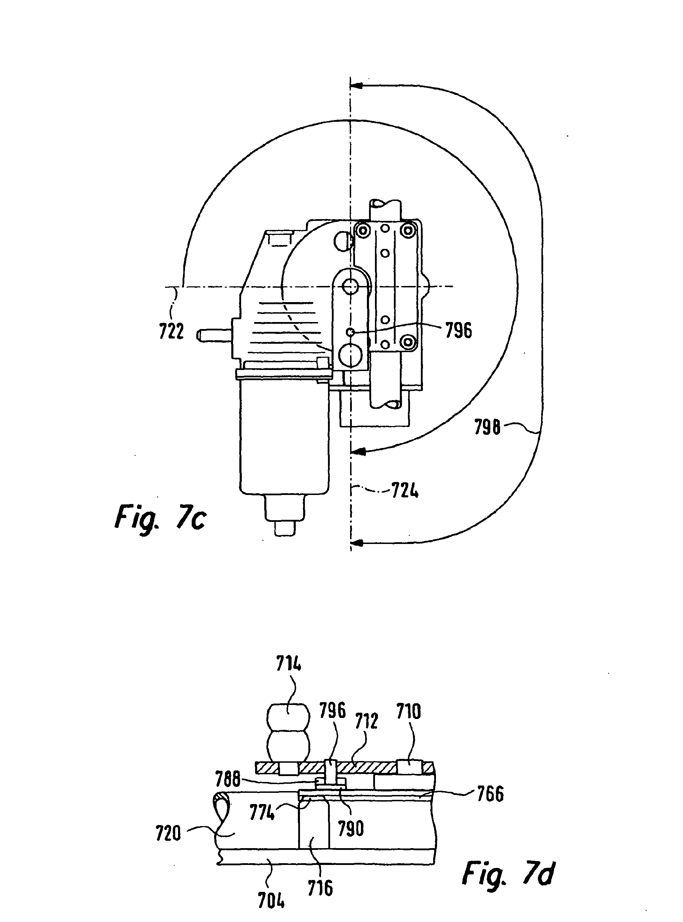

In den Figuren 7 a - d ist eine weitere Ausführungsform der Erfindung dargestellt. Der in Figur 7a dargestellte Wischerantrieb entspricht dem in Figur 1a dargestellten Wischerantrieb 2. Gemäß Figur 7b ist ein Rohrelement 720 über eine Punktschweißverbindung mit einem Halteelement 766 verbunden, das wiederum über Schrauben 774 mit dem Gehäuse 704 des Wischerantriebs 702 verbunden ist. Das Gehäuse 704 weist zwei Anschläge 788 und 792 auf, die jeweils eine Stufe 790 und 794 aufweisen.

In dem Schwingenelement 712 ist ein als Bolzen 796 ausgebildetes Anschlagelement vorgesehen, das verschiebbar in dem Schwingenelement 712 gelagert ist. Dies ist in Figur 7d im Detail dargestellt. In Figur 7d ist das Gehäuse 704 des Wischerantriebs 702 erkennbar, das die Gewindesockel 716 aufweist. Benachbart zum in Figur 7d dargestellten Gewindesockel 716 ist das Rohrelement 720 angeordnet, das über das Halteelement 766 und Schrauben 774 am Gehäuse 704 fixiert ist. Das in Figur 7d oben dargestellte Schwingenelement 712 weist endseitig einen Gelenkbolzen 714 auf, der zum Antrieb eines nicht dargestellten Wischerarms oder Wischerarmgestänges dient. An dem dem Gelenkbolzen 714 gegenüberliegenden Ende des Schwingenelements 712 ist dieses über eine Pressverbindung mit der Getriebeabtriebswelle 710 verbunden.

Zwischen der Getriebeabtriebswelle 710 und dem Gelenkbolzen 714 trägt das Schwingenelement den Bolzen 796, der verschiebbar in dem Schwingenelement 712 gelagert ist. In der in Figur 7d dargestellten Lage wirkt der Bolzen 796 mit der Stufe 790 des Anschlags 788 zusammen, so dass der Schwenkbereich des Schwingenelements 712 durch den Anschlag 788 und durch den Anschlag 792 begrenzt ist. Insgesamt kann das Schwingenelement 712 Positionen einnehmen, die innerhalb des Schwenkbereichs 798 (vergleiche Figur 7c) liegen.

Zur Montage des in den Figuren 7 a - d dargestellten Wischerantriebs 702 sind die folgenden Schritte notwendig: Zunächst wird das Halteelement 766 über eine Punktschweißverbindung mit dem Rohrelement 720 verbunden. Anschließend wird die so gebildete Baugruppe dem Wischerantrieb 702 zugeführt und dort über Schrauben 774 an dem Gehäuse 704 befestigt. Im nächsten Schritt wird das Schwingenelement 712 aus der in Figur 7b dargestellten Schwingenposition 722 in die in Figur 7c dargestellte Schwingenposition 724 gebracht. Anschließend wird das als Bolzen ausgebildete Anschlagelement 796 in Richtung auf das Gehäuse 704 verschoben, so dass der Bolzen 796 mit den Stufen 790 und 794 der Anschläge 788 und 792 zusammenwirken kann.

Alle beschriebenen Ausführungsformen haben gemeinsam, dass die Montage des Wischerantriebs mit wenigen Schritten durchgeführt werden kann und sehr einfache und preisgünstige Montageelemente verwendet werden können.

## Patentansprüche

1. Wischerantrieb (2, 202) mit einem Gehäuse (4, 204), einem Reversiermotor (6, 206) und einem dem Reversiermotor (6, 206) nachgeschalteten Getriebe (8, 208), wobei an der Getriebeabtriebswelle (10, 210) ein Schwingenelement (12, 212) zum Antrieb mindestens eines Wischerarms oder eines Wischerarmgestänges vorgesehen ist, wobei der Arbeitsbereich des Schwingenelements (12, 212) in einem durch zwei mechanische Anschläge begrenzten Schwenkbereich (98, 298) liegt, und wobei mindestens ein Anschlag (32, 232, 252) auf mindestens einem Zusatzelement (26, 226, 248) unlösbar angeordnet und das Zusatzelement (26, 226, 248) lösbar am Gehäuse (4, 204) befestigt ist, **dadurch gekennzeichnet, dass** der als Rohrelement (20, 220) ausgebildete Trägerrahmen zwischen dem Gehäuse (4, 204) und einem Rohrhalteabschnitt (40, 240, 256) des Zusatzelements (26, 226, 248) gesichert ist.

2. Wischerantrieb (202) nach Anspruch 1, **dadurch gekennzeichnet, dass** zwei Zusatzelemente (226, 248) vorgesehen sind, auf denen jeweils ein Anschlag (232, 252) vorgesehen ist.

3. Wischerantrieb (2, 202) nach Anspruch 1 oder 2, **dadurch gekennzeichnet, dass** das Zusatzelement (26, 226, 248) in verschiedenen Lagen und/oder an verschiedenen Positionen lösbar am Gehäuse (4, 204) befestigbar ist.

4. Wischerantrieb (2, 202) nach einem der vorhergehenden Ansprüche, **dadurch gekennzeichnet, dass** das Zusatzelement (26, 226, 248) an mindestens einem, vorzugsweise an mehreren Befestigungspunkten am Gehäuse (4, 204) befestigbar ist.

5. Wischerantrieb (2, 202) nach einem der vorhergehenden Ansprüche, **dadurch gekennzeichnet, dass** das Zusatzelement (26, 226, 248)als Blechformteil ausgebildet ist.

6. Wischerantrieb (202) nach einem der Ansprüche 2 bis 5, **dadurch gekennzeichnet, dass** das Zusatzelement (226) unlösbar mit dem Trägerrahmen (220) verbunden ist.

7. Wischerantrieb (202) nach Anspruch 6, **dadurch gekennzeichnet, dass** die unlösbare Verbindung (246) durch Schweißen, Löten, Kleben oder Nieten erzeugt ist.

8. Wischerantrieb (2, 202) nach einem der vorhergehenden Ansprüche, **dadurch gekennzeichnet, dass** das Schwingenelement (12, 212) unlösbar mit der Getriebeabtriebswelle (10, 210) verbunden ist.

## Claims

1. Wiper drive (2, 202) comprising a housing (4, 204), a reversing motor (6, 206) and a transmission (8, 208) downstream from the reversing motor (6, 206), wherein an oscillating element (12, 212) is provided on the transmission output shaft (10, 210) for driving at least one wiper arm or a wiper arm rod, wherein the working range of the oscillating element (12, 212) lies within a pivoting range (98, 298) limited by two mechanical stops and wherein at least one stop (32, 232, 352) is undetachably arranged on at least one additional element (26, 226, 248) and the additional element (26, 226, 248) is detachably fixed to the housing (4, 204), **characterised in that** the support frame designed as a tube element (20, 220) is secured between the housing (4, 204) and a tube retaining section (40, 240, 256) of the additional element (26, 226, 248).

2. Wiper drive (202) according to claim 1, **characterised in that** two additional elements (226, 248) are provided, on which a stop (232, 252) is provided respectively.

3. Wiper drive (2, 202) according to claim 1 or 2, **characterised in that** the additional element (26, 226, 248) is can be detachably fixed in different locations and/or at different positions on the housing (4, 204).

4. Wiper drive (2, 202) according to one of the above claims, **characterised in that** the additional element (26, 226, 248) can be fixed at at least one and preferably several attachment points on the housing (4, 204).

5. Wiper drive (2, 202) according to one of the above claims, **characterised in that** the additional element (26, 226, 248) is designed as a metal sheet moulding.

6. Wiper drive (202) according to one of claims 2 to 5, **characterised in that** the additional element (226) is undetachably connected to the support frame (220).

7. Wiper drive (202) according to claim 6, **characterised in that** the undetachable connection (246) is produced by welding, soldering; gluing or riveting.

8. Wiper drive (2, 202) according to one of the above claims, **characterised in that** the oscillating element (12, 212) is undetachably connected to the transmission output shaft (10, 210).

## Revendications

1. Moto-réducteur d'essuie-glace (2, 202) comportant un carter (4, 204), un moteur réversible (6, 206) et un réducteur à engrenages (8, 208) monté en aval du moteur réversible (6, 206), dans lequel un élément oscillant (12, 212) destiné à entraîner au moins un bras d'essuie-glace ou une tringlerie d'essuie-glace est prévu sur l'arbre de sortie du réducteur à engrenages (10, 210), la zone de travail de l'élément oscillant (12, 212) se situe dans une zone de pivotement (98, 298) limitée par deux butées mécaniques, et au moins une butée (32, 232, 252) est agencée de façon inamovible sur au moins un élément complémentaire (26, 226, 248) et l'élément complémentaire (26, 226, 248) est fixé de façon amovible au carter (4, 204), **caractérisé en ce que** l'élément tubulaire (20, 220) présentant la forme d'un cadre support est fixé solidement entre le carter (4, 204) et un segment de retenue tubulaire (40, 240, 256) de l'élément complémentaire (26, 226, 248).

2. Moto-réducteur d'essuie-glace (202) selon la revendication 1, **caractérisé en ce que** deux éléments supplémentaires (226, 248) sont prévus, sur lesquels une butée (232, 252) est respectivement prévue.

3. Moto-réducteur d'essuie-glace (2, 202) selon la revendication 1 ou 2, **caractérisé en ce que** l'élément complémentaire (26, 226, 248) peut être fixé de façon amovible au carter (4, 204) dans différentes situations et/ou positions.

4. Moto-réducteur d'essuie-glace (2, 202) selon l'une quelconque des revendications précédentes, **caractérisé en ce que** l'élément complémentaire (26, 226, 248) peut être fixé au carter (4, 204) à au moins un, de préférence, plusieurs points de fixation.

5. Moto-réducteur d'essuie-glace (2, 202) selon l'une quelconque des revendications précédentes, **caractérisé en ce que** l'élément complémentaire (26, 226, 248) présente la forme d'un composant en tôle.

6. Moto-réducteur d'essuie-glace (202) selon l'une quelconque des revendications 2 à 5, **caractérisé en ce que** l'élément complémentaire (226) est relié de façon inamovible au cadre support (220).

7. Moto-réducteur d'essuie-glace (202) selon la revendication 6, **caractérisé en ce que** la liaison inamovible (246) est réalisée par soudage, brasage, collage ou rivetage.

8. Moto-réducteur d'essuie-glace (2, 202) selon l'une quelconque des revendications précédentes, **caractérisé en ce que** l'élément oscillant (12, 212) est relié de façon inamovible à l'arbre de sortie du réducteur à engrenages (10, 210).
